# EUROPÄISCHE PATENTSCHRIFT

(11) **EP 2 208 879 B1**
(45) Veröffentlichungstag und Bekanntmachung des Hinweises auf die Patenterteilung: **09.11.2011**
(21) Anmeldenummer: 10000347.4
(22) Anmeldetag: 15.01.2010
(51) Int. Cl.: F02D 19/08, F02M 25/00, F02M 43/00, C10L 1/12, C10L 1/32, F02D 19/12

(54) **Verfahren und Vorrichtung zum Betrieb eines Dieselmotors mit einem Mischkraftstoff**
Device and method for operating a diesel engine with a fuel mixture
Procédé et dispositif de fonctionnement d'un moteur diésel doté d'un carburant mixte

(30) Priorität: 16.01.2009 DE 102009005356
(43) Veröffentlichungstag der Anmeldung: 21.07.2010
(73) Patentinhaber: Voith Patent GmbH, 89522 Heidenheim (DE)
(72) Erfinder: Bartosch, Stephan, 89192 Rammingen (DE)
(74) Vertreter: Dr. Weitzel & Partner

(56) Entgegenhaltungen:
- US-A- 4 958 598
- US-A1- 2005 126 513
- US-A1- 2007 131 180
- US-A1- 2007 245 719

## Beschreibung

Die Erfindung betrifft ein Verfahren und eine Vorrichtung zum Betreiben elnes Dieselmotors mit einem Mischkraftstoff, insbesondere mit einer Zugabe von Alkohol, vorzugsweise Ethanol oder Methanol, zu Diesel.

Aus Erdöl hergestellter Dieselkraftstoff besteht aus mehr als 3000 organischen Kohlenwasserstoffverbindungen und weiteren, unerwünschten anorganischen Anteilen, wie beispielsweise Schwefel. Dies Ist einer der Gründe, weshalb die gegenüber Ottomotoren sparsameren Dieselantriebe unbefriedigende Abgasemissionswerte aufweisen. Abgasbestandteile von Bedeutung sind Stickoxide (NOₓ), Kohlenmonoxid, Schwefeldioxid, Aldehyde, Ethanal, Propenal. Des Weiteren werden unverbrannte Kohlenwasserstoffe und Rußpartikel (PM) ausgestoßen, wobei letztere eine wesentliche, aus dem Betrieb von Fahrzeugen resultierende Feinstaubquelle darstellen.

Bei der Entwicklung emlssionsverminderter Dieselmotoren besteht eine Schwierigkeit darin, dass die NOₓ- und PM-Abgasanteile in einem Zusammenhang stehen, sodass eine gleichzeitige Reduktion durch eine Veränderung der Verbrennungsparameter nicht möglich ist. Wird beispielsweise der NOₓ₋Anteil durch eine verzögerte Einspritzung verringert, führt dies neben einer Erhöhung des Kraftstoffverbrauchs zu einem Anstieg des PM-Anteils im Abgas. Ein Weg zur Emlssionsverringerung besteht daher darin, geeignete Maßnahmen der Abgasbehandlung auszuführen. Hierzu sind Diesel-Oxldationskatalysatoren (DOC), SCR-Katalysatoren und Partikelfilter zu nennen.

Des Weiteren kann Abgas gekühlt in den Brennraum zurückgeführt werden, um die Bildung von Stickoxiden und Rußpartikeln zu verringern. Allerdings steigt durch diese Maßnahme der Kohlenmonoxidausstoß und der Anteil unverbrannter Kohlenwasserstoffe deutlich an, die wiederum durch einen Oxidatlonskatalysator beseitigt werden müssen. Des Weiteren kann der gewünschte, homogene Verbrennungsbereich nur für Teillastbedingungen und bei niedrigen Drehzahlen aufrechterhalten werden, sodass für höhere Lastanforderungen und mit steigender Drehzahl ein Übergang zur konventionellen Verbrennung nicht zu vermelden ist.

Von der voranstehenden Problematik ausgehend, werden Anstrengungen unternommen, den Kraftstoß für Dieselmotoren Im Hinblick auf eine Emlssionsverbesserung durch Zumischungen weiterzuentwickeln. Dabei kommen synthetisch aus Biomasse, Erdgas oder Kohle hergestellte Kraftstoffe in Frage. Die hierfür entwickelten Verfahren sind jedoch aufwändig, sodass vorgeschlagen wurde, einfacher herzustellende Alkohole wie Methanol, Ethanol, Propanol und Isobutanol beizumischen. Für derartige Alkoholzusätze wird auf die DE 40 31 008 C1 verwiesen.

Während Superbenzin oder Normalbenzin im Wesentlichen in beliebigen Anteilen mit Alkohol mischbar sind, ist dies für Dieselkraftstoffe nicht der Fall, da diese aus einer Mischung langkettiger Kohlenwasserstoffmoleküle bestehen. Um diese Problematik zu umgehen, wurden Additive für Dieselkraftstoffe vorgeschlagen. Dabei beschreibt die DE 197 82 068 B4 die Verwendung eines nicht ionogenen Tensids oder eine Mischung solcher Tenside mit einem angepassten hydrophillipophilen Gleichgewicht (HLB). Dabei bestimmt sich der HLB-Wert aus dem Molekulargewlcht der hyprophilen Kette des Tensids im Verhältnis zum Gesamtmolekutargewicht. Eine solche Additivzugabe zu Diesel verringert den Rußpartikelausstoß. Des Weiteren kann mittels des Additivs ein Kraftstoffgemisch, insbesondere auf der Basis von Alkohol, stabilisiert und homogenisiert werden. Ferner kann im Kraftstoffgemisch vorhandenes Wasser solubilisiert werden.

Eine weitere Verwendung von Tensiden zur Herstellung eines Dieselalkoholgemiaches ist aus der US 7,172,635 B2 bekannt. Dabel wird vorgeschlagen, als Additiv eine Mischung aus Ölsäurealkanolamid und alkoxylierter Ölsäure, die im Wesentlichen frei von ethoxyliertem Alkohol ist, zu verwenden. Von einem Mischkraftstoff ausgehend wird in der WO 2005/077495 A1 ein Dlesel-/Ethanolgemisch beschrieben, das die Effizienz eines dem Dieselmotor nachgeschalteten Dieseloxldationskatalysators verbessert. Dabei wird für das nicht lonische Tensid als Ölsäurealkanolamid Ethanolamid und Diethanolamid verwendet. Als alkoxylierte Ölsäure wird Ethoxylat und Propoxylat gewählt. Als Alkohol wird Ethanol bevorzugt, wobei durch das Additiv auch ein wässriger Alkohol mit einem Gewichtsanteil von 5 % Wasser verwendet werden kann. Dabei werden Alkoholzusätze zu Diesel, in den auch Blodiesel eingemischt werden kann, mit einem Volumenantell von 1 - 25 %, beschrieben. Eine solche Diesel-Ethanol-Mischung mit Tensidzugabe ist als O2Diesel® erhältlich, wobei für diesen Alternativkraftstoff als Vortell eine Reduktion von Kohlenmonoxid, von Stickoxiden sowie von Rußpartikeln genannt wird. Des Weiteren sollen die Schmierfählgkeit sowie der Cetanwert gegenüber einem durchschnlttlichen Dieselkraftstoff verbessert sein.

Der zur Dieselzumischung verwendete Alkohol kann mittels eines Fermentationsprozesses aus stärkebasiertem Zucker hergestellt werden, die beispielsweise aus Getreiden, Zuckerrohr, Zuckerrüben oder Maniok gewonnen werden, Alternativ können Alkohole durch eine Säurebehandlung oder eine enzymatische Hydrolyse aus Biomasse gewonnen werden. Hierfür kommen unterschiedliche Zellulosen und organische Abfälle, einschließlich Klärschlamm, in Frage. Als Folge verbessert der Alkoholzuschlag die CO₂-Bilanz.

Nachteilig an den voranstehend genannten Alkoholbeimischungen für Diesel ist die notwendige Additivzugabe, die zu zusätzlichen Kosten führt. Das Weiteren kann sich bei einer längeren Lagerung der Mischkraftstoffe eine Trennung in einzelne Phasen ergeben. Außerdem kann insbesondere beim Zutanken unverschnittenen Diesels der Alkoholgehalt im Kraftstoff nicht als konstant angenommen werden. Es sind daher Vorkehrungen zu treffen, um zur geeigneten Wahl der Parameter für die Kraftstoffeinspritzung in den Brennraum sensorische Daten zu verwenden, die eine Aussage über die Kraftstoffzusammensetzung liefern, Kraftstoffsensoren, die für diese Aufgabe geeignet sind, werden beispielsweise in der DE 40 31 008 C1 und der DE 41 26 856 A1 beschrieben.

Eine weitere Möglichkeit, Dieselkraftstoff im Hinblick auf die Emissionswerte zu verbessern, besteht darin, dem Kraftstoff einen Wasseranteil zuzumischen. Der Wasseranteil führt in der Brennkammer zu einem Dampfmotoreffekt. Dabei wird zusätzlich zur Kühlung aufgrund des Siedens der Wasserphase die eigentliche Kraftstoffkomponente wesentlich feiner vernebelt als dies auch bei sehr hohem Einspritzdruck möglich wäre. Aufgrund der hieraus resultierenden verbesserten Verbrennung sinkt der Ausstoß an Rußpartikeln und Stickoxiden deutlich.

Das Problem einer Wasserzumischung zu Dieselkraftstoffen besteht darin, möglichst langzeitstabile Wasser-/Dieselemulsionen zu schaffen. Beispielhaft wird hierzu auf die US 7,229,481 B2 verwiesen. Der in dieser Schrift beschriebene Diesel-Wasser-Kraftstoff Aquazole® weist einen 13%eigen Wasseranteil im Diesel auf, wobei die Emulsion in einem Temperaturbereich von -20 bis 80°C für wenigstens drei Monate stabil ist. Eine Weiterentwlcklung für einen Wasser-Diesel-Mischkraftstoff sieht eine Mikroemulsion vor. Hierzu wird auf die DE 103 34 897 A1 verwiesen.

Um das Problem der zu geringen Langzeitstabllltät von Wasser-Kraftstoff-Emulsionen zu überwinden, kann eine Zumischung des Wassers im Kraftstoff während des Motorbetriebs in der Kraftstoffzuführung erfolgen. Hierzu wird auf die WO 01/07542 A1 verwiesen. Aus dieser Schrift ist die Zuführung von Wasser bei einer Temperatur oberhalb 250°C und unterhalb der kritischen Temperatur sowie für einen unterkritischen Druck zu einem Kohlenwasserstoff-basierten Treibstoff bekannt. Demnach wird der Wasserantell Im gasförmigen Zustand zugemischt. Eine Alternative wird durch die WO 99/31204 offenbart, in der eine Vermischung von Wasser und Diesel oberhalb des kritischen Drucks und der kritischen Temperatur vorgeschlagen wird, sodass im überkritischen Zustand die Wasser-Brennstoff-Mischung als einzige, homogene Phase vorliegt.

Eine weitere Möglichkeit, eine Diesel-Wasser-Emulsion vor dem Eintritt in die Brennkammer herzustellen, wird durch die Druckschriften DE 198 20 707 C1 und EP 0 953 760 B1 offenbart. Hierzu wird eine Emulgiervorrichtung dem Kraftstoffeinspritzsystem des Motors vorgeschaltet, die durch mechanische Agitation und ohne die Zuhilfenahme beweglicher Komponenten arbeitet, Ferner wird offenbart, den Anteil des dem Diesel zugemischten Wassers an die jeweilige Betriebssituation anzupassen, um insbesondere bei niedrigen Geschwindigkeiten ein fettes, dieselreiches Gemisch oder reinen Diesel einzuspritzen, während bei höheren FahrtgesChwindigkelten der Wasseranteil im Mischkraftstoff bis zu 20 % betragen kann.

Des Weiteren ist aus der US 4,958,598 die Zuführung eines Wasser-Alkohalgernisches mit einer kleinen Beimengung eines synthetischen Öls zu einem Dieselmotor durch eine Eindüsung in die Luftzuführung für die Brennkammern bekannt. Dabei erfolgt die Beimischung getrennt von der Dieseleinspritzung. Ferner offenbaren US 2007/0 245 719 A, US 2007/0 131 180 A und US 4 958 598 A eine separate Zuführung einer Wasser-Alkoholmischung In das Luftansaugrohr oder die Brennkammer eines Dieselmotors.

Der Erfindung liegt die Aufgabe zugrunde, einen Mischkraftstoff für einen Dieselmotor bzw. ein Verfahren für dessen Betrieb anzugeben, das zu einem verringerten Emissionsausstoß führt. Dabei soll sich die Vorrichtung durch konstruktive Einfachheit auszeichnen und in bestehenden Fahrzeugen mit Dieselantrieb nachgerüstet werden können. Ferner sollte ein sicherer Betrieb auch im Falle eines Austritts des Mischkraftstoffes oder von Teilkomponenten des Kraftstoffs gewährleistet sein.

Die der Erfindung zugrunde liegende Aufgabe wird durch die Merkmale der unabhängigen Ansprüche gelöst. Vorteilhafte Ausgestaltungen ergeben sich aus den Unteransprüchen.

Der Erfindung liegt das Konzept zugrunde, Dieselkraftstoff vor dem Eintritt in die Brennkammer einen Alkohol oder mehrere Alkohole und Wasser beizumischen. Besonders bevorzugt wird als Alkohol Ethanol oder Methanol; auch Propanol und Isobutanol sind denkbar. Für den Wasseranteil wird entionisiertes und bevorzugt entgastes Wasser verwendet. Der Dieselkraftstoff kann rohölbasiert oder synthetisch hergestellt sein und weist bevorzugt einen für Diesel typischen Siedepunkt im Bereich von 150 bis 400°C sowie eine Dichte von 0,75 bis 0,9 g/cm³ sowie einen Cetanwert im Bereich von 35 bis 80 auf. Ferner hat geeigneter Diesel eine kinematische Viskosität bei 40°C im Bereich von 1,5 bis 4,5 mm/s². Synthetischer Diesel kann aus Erdgas (GtL) oder Biomasse (BtL - Biodiesel) hergestellt sein. Ferner ist auch die Verwendung von Pflanzenölen als Dieselkomponente denkbar. Des Weiteren können die genannten rohölbasieren oder synthetisch hergestellten Dieselkraftstoffe in beliebigen Mischungsverhältnissen die für die vorliegende Erfindung verwendete Dieselkomponente bildern.

Für die vorliegende Erfindung wird der Alkohol- und Wasserzusatz zum Diesel vor der Zuleitung zur Brennkammer bewirkt, wobei die der Brennkammer ausgeführten Kraftstoffanteile bevorzugt als Flüssigphase vorliegen. Dies hat gegenüber der separaten Beimischung eines Alkohol-Wasser-Gemisches in der Luftzuführung den Vorteil, dass in der Brennkammer die Alkohol- und Wasseranteile durch deren explosionsartige Verdampfung einen Dampfmotoreffekt bewirken und aufgrund der verbesserten Kühlung die Effizienz des Verbrennungsprozesses steigern. Dabei verringert die kombinierte Zugabe von Wasser und Alkohol zum Diesel die Emissionswerte gegenüber einer reinen Alkohol- oder Wasserzugabe nochmals deutlich. Zu diesem Effekt wird zum einen das unterschiedliche Siedeverhalten der Wasser- und Alkoholphase einen Beitrag leisten, sodass ein zeitlich und räumlich versetztes Vernebeln der brennbaren Kraftstoffanteile eintritt. Zum anderen kann zur effizienten Kühlung aufgrund der Zündbarkeit der Alkoholkomponente ein hoher Wasseranteil zugegeben werden, ohne dass der Brennprozess negativ beeinflusst wird. Weitere Vorteile der kombinierten Alkohol-Wasser-Zumischung sind im Lagerungs-, Mischungs- und Entmischungsverhalten zu sehen. Erfindungsgemäß wird eine Mischung von Wasser zu Alkohol mit einem Volumenverhältnis von 40:60 bis 60:40 und besonderes bevorzugt von 45:55 bis 55:45 mit einem geringen Gefahrenpotenzial in einem Zusatztank im Fahrzeug mitgeführt werden. Die Entzündungsneigung einer solchen Mischung entspricht im Wesentlichen jener des bisher verwendeten reinen Dieselkraftstoffs.

Des Weiteren kann eine von den Betriebsparametern abhängige Kraftstoffzusammensetzung dem Dieselmotor zeitvariabel zugeführt werden. Hierbei kommt insbesondere eine Abstimmung auf die Betriebsparameter Motortemperatur, Motordrehzahl, Lastanforderung, Abgastemperatur sowie auf sensorische Daten aus dem Abgasstrang in Frage. Für letzteres können beispielsweise eine λ-Sonde, ein NOₓ-Sensor, ein CO₂-Sensor oder ein Partikelsensor oder eine Kombination dieser Sensoren eingesetzt werden. Des Weiteren kann eine Abstimmung mit der Steuerung des dem Dieselmotor nachfolgenden Abgasreinigungssystems erfolgen. Ein Beispiel hierfür ist eine Anpassung der Kraftstoffzusammensetzung in Abhängigkeit einer Reinigung eines Partikelfilters mittels eines Rußabbrands.

Für das Zweitanksystem erfolgt die Zumischung von Alkohol und Wasser bevorzugt unmittelbar vor dem Eintritt in die Brennkammer. Hierzu wirol eine separate Emulgiervorrichtung verwendet, von der aus der Mischkraftstoff einem Einspritzsystem zugeführt wird. Denkbar ist die Ausführung einer Vorkammer-, einer Wirbelkammer- oder einer Direkteinspritzung.

Als Direktelnspritzung wird insbesondere eine Common-Rail-Einspritzung bevorzugt. Für diesen Fall kann für eine vorteilhafte Gestaltung die Zumischung des Alkohol- und Wasserzusatzes zum Diesel vor der Hochdruckpumpe oder direkt im Kraftstoff-Hochdruckspelcher (rail) zur Versorgung der einzelnen Zylinder ausgeführt werden. Dabei kann durch eine Steuerung der Druckerzeugungseinrichtungen sowie des durch diese geführten Volumendurchsawes für die einzelnen Komponenten des Mischkraftstoffs eine zeitlich variable Mischung hergestelit werden.

Nachfolgend wird die Erfindung anhand eines Ausführungsbeispiels in Verbindung mit einer Figurendarstellung genauer erläutert. In dieser ist im Einzelnen Folgendes dargestellt:

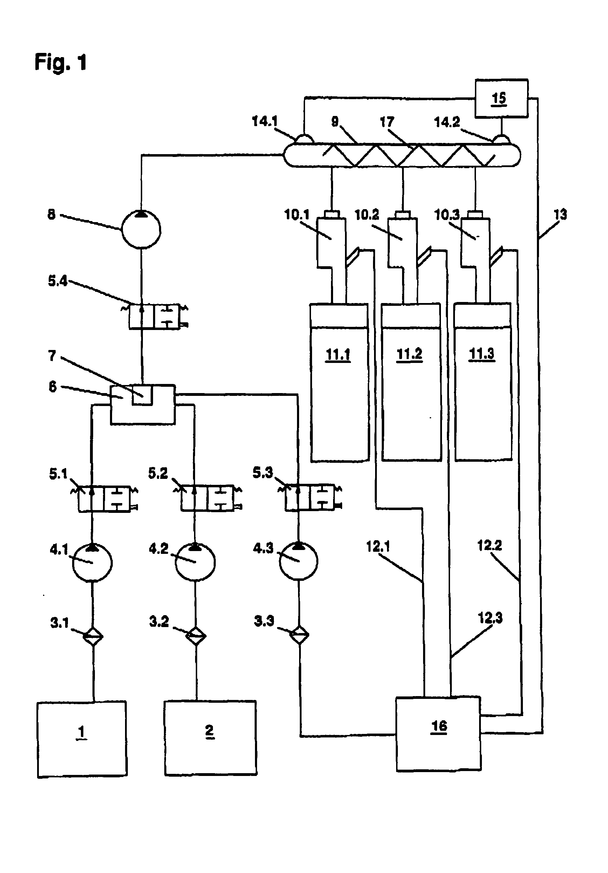

- Figur 1: zeigt schematisch vereinfacht eine Ausgestaltung der Erfindung mit einem Zweitanksystem und einem zusätzlichen Rücklauftank.

Figur 1 zeigt ein schematisiertes Ausführungsbeispiel der Erfindung. Dabei werden für die Zylinder des Dieselmotors exemplarisch drei Brennkammern 11.1, 11.2, 11.3 dargestellt, die vorliegend mittels der Injektoren 10.1, 10.2, 10.3, die Teil eines Common-Rail-Systems sind, mit dem erfindungsgemäßen Alternativkraftstoff versorgt werden. Dieser wird beim Betrieb des Dieselmotors aus den Komponenten Diesel, Wasser und Alkohol gemischt.

Für die dargestellte Ausgestaltung ist in einem ersten Vorratstank 1 der reine Dieselkraftstoff bevorratet. Dieser wird über den Filter 3.1 und die Förderpumpe 4.1 sowie das Ventil 5.1, das der Druckeinstellung dient, einer Emulgiervorrichtung 6 zugeführt. Diese erhält eine zusätzliche Kraftstoffkomponente aus dem zweiten Vorratstank 2, wiederum über einen Filter 3.2, eine Förderpumpe 4.2 und ein Ventil 5.2. Im zweiten Vorratstank 2 befindet sich für das dargestellte Ausgestaltungsbeispiel eine Wasser-/Alkoholmischung mit einem im Wesentlichen konstanten Mischungsverhältnis, das so gewählt ist, dass die Mischung eine gegenüber reinem Alkohol deutlich reduzierte Entzündbarkeit aufweist. . Besonders bevorzugt wird bezogen auf das Volumen eine 50:50-Mischung aus Wasser und Alkohol im zweiten Vorratstank 2 verwendet.

Mittels der Emulgiervorrichtung 6 werden die Kraftstoffkomponenten Diesel, Wasser und Alkohol in einem vorbestimmten, bevorzugt in einem wählbaren Verhältnis gemischt und in eine Emulsion überführt. Zur Kontrolle der Zusammensetzung dient ein Kraftstoffsensor 7. In Strömungsrichtung dem Kraftstoffsensor 7 nachfolgend ist ein Ventil 5.4 einer Hochdruckpumpe 8 vorgeschaltet, die den Hochdruckspeicher (rail) 9 eines Common-Rail-Systems belädt. Aus dem Hochdruckspeicher 9 werden die Injektoren 10.1, 10.2, 10.3 mit der Kraftstoffmischung versorgt.

Das in der Emulgiervorrichtung 6 eingestellte Volumenverhältnis der einzelnen Kraftstoffkomponenten kann einen festen Wert aufweisen, der vom Motortyp oder der gewählten Dieselkomponente und/oder dem gewählten Alkohol abhängig ist. Für eine Weitergestaltung wird das Mischungsverhältnis zeitlich variabel an die Motor- und/oder Abgasparameter angepasst. Eine hierfür verwendete Steuerung und Sensorik ist im Einzelnen nicht in Figur 1 dargestellt.

Für eine Weitergestaltung der Erfindung sind Vorkehrungen getroffen, um einem Entmischen des Kraftstoffs im Hochdruckspeicher 9 entgegenzuwirken. Hierzu ist in Figur 1 eine sekundäre Emulgiervorrichtung 15 skizziert, die mittels einer geeigneten mechanischen Verwirbelung die emulgierte Kraftstoffmischung im Hochdruckspeicher 9 stabil hält. Hierzu sind unterschiedliche Systeme zur Agitation denkbar, im einfachsten Fall liegt ein mechanisches System mit bewegten Teilen vor. Eine solche Variante ist jedoch für ein Common-Rail-System mit einem Druck oberhalb 2000 bar konstruktiv aufwendig. Für die dargestellte Ausgestaltung ist daher die sekundäre Emulgiervorrichtung 15 mit zwei räumlich beabstandeten Druckbegrenzern 14.1, 14.2 am Hochdruckspeicher 9 verbunden, deren Druckvorgaben so eingestellt werden, dass im Hochdruckspeicher 9 eine Strömungsoszillation oder ein ständiges Umwälzen des Mischkraftstoffs über die sekundäre Emulgiervorrichtung 15 resultiert, wobei mittels eines geeigneten Strömungsbrechers 17 im Hochdruckspeicher 9 eine Vielfach-Umlenkung vorgenommen wird, sodass der im Hochdruckspeicher 9 befindliche Kraftstoff durch eine permanente Bewegung im emulgierten Zustand verbleibt.

Für eine vereinfachte Variante wird die Kraftstoffemulsion im Hochdruckspeicher 9 dadurch stabil gehalten, dass ein ständiger Kraftstoffdurchfluss erfolgt oder indem, unmittelbar vor einem Motorstillstand oder einer geringen Kraftstoffentnahme aus dem Hochdruckspeicher durch die Injektoren eine dieselreiche, stabile Kraftstoffmischung dem Hochdruckspeicher 9 zugeführt wird.

Des Weiteren ist in Figur 1 ein Rücklauftank 16 gezeigt, in den der Kraftstofffluss in den Injektor-Rücklaufleitungen 12.1, 12.2, 12.3 sowie in der Hochdruckspeicher-Rücklaufleitung 13 aufgenommen wird. Im Rücklauftank 16 liegen demnach Diesel, Wasser und Alkohol vor, sodass nach einer gewissen Zeit eine Entmischung eintreten wird. Durch eine geeignete, im Einzelnen nicht dargestellte Einrichtung kann vor der Entnahme eines Flüssigkeitsabzugs aus dem Rücklauftank 16 über den Filter 3.3, die Förderpumpe 4.3 und das Ventil 5.3 zur Emulgiervorrichtung 6 eine Zwangsdurchmischung erfolgen. Alternativ wird zur konstruktiven Vereinfachung auf ein Durchmischen verzichtet und die Ventile 5.1 - 5.3 bzw. die Förderpumpen 4.1 - 4.3 werden so gesteuert, dass in der Emulgiervorrichtung die gewünschte Kraftstoffzusammensetzung eingestellt wird.

Ferner kann für eine Weitergestaltung, die im Einzelnen nicht in Figur 1 dargestellt ist, auf einen separaten Rücklauftank 16 verzichtet werden und der Rücklauf dem ersten Vorratstank 1 für den Dieselkraftstoff zugeführt werden. Für eine weitere, ebenfalls nicht dargestellte Ausgestaltung kann der Abzug aus dem zweiten Vorratstank 2 mit der Wasser-/Alkoholmischung vor der Zuleitung zur Emulgiervorrichtung 6 eine Trennvorrichtung, beispielsweise ein Verdampfungssystem, aufweisen, die es ermöglicht, einen Teil des Alkohols oder des Wasser abzutrennen, um den Dieselmotor mit einer mit Wasser oder Alkohol angereicherten Beimischung betreiben zu können.

### Bezugszeichenliste

- 1: Vorratstank
- 2: Vorratstank
- 3.1, 3.2, 3.3: Filter
- 4.1, 4.2, 4.3: Förderpumpe
- 5.1, 5.2, 5.3, 5.4: Ventil
- 6: Emulgiervorrichtung
- 7: Kraftstoffsensor
- 8: Hochdruckpumpe
- 9: Hochdruckspeicher (rail)
- 10.1, 10.2, 10.3: Injektor
- 11.1, 11.2, 11.3: Brennkammer
- 12.1, 12.2, 12.3: Injektor-Rücklaufleitung
- 13: Hochdruckspeicher-Rücklaufleitung
- 14.1, 14.3: Druckbegrenzer
- 15: sekundäre Emulgiervorrichtung
- 16: Rücklauftank
- 17: Strömungsbrecher
- 18: Vorratstank

## Patentansprüche

1. Verfahren zum Betrieb eines Dieselmotors, umfassend
1.1 die Zuleitung eines Kraftstoffs mit einem Diesel-, einem Wasser- und einem Alkoholanteil mittels einer Kraftstoffzufuhreinrichtung zu einer Brennkammer (11.1, 11.2, 11.3) des Dieselmotors,
1.2 wobei der Wasser- und der Alkoholanteil des Kraftstoffs aus einem Vorratstank (2) mit einer Wasser-Alkoholmischung entnommen wird, in dem ein Mischungsverhältnis von 40:60 bis 60:40 von Wasser zu Alkohol bezogen auf das Volumen vorliegt;
**dadurch gekennzeichnet, dass**
1.3 der Kraftstoff mittels einer Emulgiervorrichtung (6), vor dem Eintritt in die Brennkammer (11.1, 11.2, 11.3) aus Diesel und der Wasser-Alkoholmischung gemischt wird.

2. Verfahren nach Anspruch 1, **dadurch gekennzeichnet, dass** als Dieselkomponente ein rohölbasierter oder synthetisch hergestellter Dieselkraftstoff wie GtL, BtL oder ein Pflanzenöl oder eine Mischung dieser Stoffe verwendet wird.

3. Verfahren nach einem Ansprüche 1 oder 2, **dadurch gekennzeichnet, dass** als Alkohol Ethanol, Methanol, Propanol oder Isobutanol oder eine Mischung aus diesen Alkoholen verwendet wird.

4. Verfahren nach einem der vorausgehenden Ansprüche, **dadurch gekennzeichnet, dass** die Volumenanteile von Diesel und der Wasser-Alkoholmischung im Kraftstoff zeitlich variabel sind und von Betriebsparametern des Dieselmotors oder eines Abgasbehandlungssystems des Dieselmotors abhängen.

5. Verfahren nach einem der vorausgehenden Ansprüche, **dadurch gekennzeichnet, dass** ein Teil des Kraftstoffs, der neben Diesel, Wasser und Alkohol umfasst, in einem Hochdruckspeicher (9) der Kraftstoffzufuhreinrichtung für die Zuführung zur Brennkammer (11.1, 11.2, 11.3) bevorratet wird und dem Hochdruckspeicher (9) eine sekundäre Emulgiervorrichtung (15) zugeordnet ist, um ein Entmischen der Kraftstoffkomponenten zu vermeiden.

6. Vorrichtung zum Zuführen eines Mischkraftstoffs zu einer Brennkammer (11.1, 11.2, 11.3) eines Dieselmotors, umfassend
6.1 einen ersten Vorratstank (1) zur Bevorratung von Diesel;
6.2 einen zweiten Vorratstank (2).zur Bevorratung einer Wasser-Alkoholmischung, wobei im zweiten Vorratstank (2) ein Mischungsverhältnis von 40:60 bis 60:40 von Wasser zu Alkohol bezogen auf das Volumen vorliegt;
**dadurch gekennzeichnet, dass**
6.3 die Vorrichtung ferner eine Kraftstoffzufuhreinrichtung mit einer Emulgiervorrichtung (6) zur Herstellung einer Emulsion aus Diesel und der Wasser-Alkoholmischung vor dem Eintritt in die Brennkammer (11.1, 11.2, 11.3) umfasst.

7. Vorrichtung nach Anspruch 6, **dadurch gekennzeichnet, dass** der Emulgiervorrichtung (6) eine sekundäre Emulgiervorrichtung (15) nachfolgt, die eine Kraftstoffmischung aus Diesel, Wasser und Alkohol in einem Hochdruckspeicher (9) der Kraftstoffzufuhreinrichtung stabil hält.

## Claims

1. A method for operating a diesel engine, including
1.1 the supply of a fuel containing a diesel proportion, a water proportion and an alcohol proportion by means of a fuel feed device to a combustion chamber (11.1, 11.2, 11.3) of the diesel engine,
1.2 whereas the water proportion and the alcohol proportion of the fuel are removed from a storage tank (2) with a water and alcohol mixture, in which the mixing ratio of water to alcohol is 40:60 to 60:40 relative to the volume;
**characterised in that**
1.3 the fuel is mixed from diesel and the water and alcohol mixture by means of an emulsifying device (6) before entering the combustion chamber (11.1,11.2, 11.3).

2. The method of claim 1, **characterised in that** a crude oil based diesel fuel or a diesel fuel of synthetic fabrication such as GtL, BtL or vegetable oil or a mixture of said fuels are used as diesel component.

3. The method according to one of the claims 1 or 2, **characterised in that** ethanol, methanol, propane or isobutanol or a mixture composed of these alcohols is used as alcohol.

4. The method according to one of the previous claims, **characterised in that** the volume proportions of diesel and of the water and alcohol mixture in the fuel are variable with time and depend on the operating parameters of the diesel engine or of an exhaust gas processing system of the diesel engine.

5. The method according to one of the previous claims, **characterised in that** a portion of the fuel which comprises water and alcohol in addition to diesel, is kept in a high-pressure storage tank (9) of the fuel feed device for supply to the combustion chamber (11.1, 11.2, 11.3) and a secondary emulsifying device (15) is associated with the high-pressure storage tank (9) to avoid separation of the fuel components.

6. A device for supplying a mixed fuel to a combustion chamber (11.1,11.2,11.3) of a diesel engine, including
6.1 a first storage tank (1) for storing diesel;
6.2 a second storage tank (2) for storing a water and alcohol mixture, whereas the mixing ratio of water to alcohol is 40:60 to 60:40 related to the volume in the second storage tank (2);
**characterised in that**
6.3 the device further comprises a fuel feed device with an emulsifying device (6) for producing an emulsion composed of diesel and the water and alcohol mixture before entering the combustion chamber (11.1, 11.2, 11.3).

7. The device according to claim 6, **characterised in** and a secondary emulsifying device (15) follows the emulsifying device (6), which device keeps stable a fuel mixture composed of diesel, water and alcohol in a high-pressure storage tank (9) of the fuel feed device.

## Revendications

1. Procédé de fonctionnement d'un moteur diesel, comprenant
1.1 l'arrivée d'un carburant avec une partie diesel, une partie eau et une partie alcool par le biais d'un dispositif d'arrivée de carburant à une chambre de combustion (11.1, 11.2, 11.3) du moteur diesel,
1.2 dans lequel la partie eau et la partie alcool du carburant sont prélevées d'un réservoir d'approvisionnement (2) avec un mélange eau et alcool, dans lequel on a un rapport de mélange de 40:60 à 60:40 entre l'eau et l'alcool par rapport au volume;
**caractérisé en ce que**
1.3 l'on mélange le carburant par le biais d'un dispositif d'émulsification (6), avant de pénétrer dans la chambre de combustion (11.1, 11.2, 11.3) à partir de diesel et du mélange eau et alcool.

2. Procédé selon la revendication 1, **caractérisé en ce que** l'on utilise comme composante diesel un carburant diesel à base d'huile brute ou de fabrication synthétique comme le GtL, le BtL ou une huile végétale ou bien un mélange de ces matériaux.

3. Procédé selon l'une des revendications 1 ou 2, **caractérisé en ce que** l'on utilise comme alcool l'éthanol, le méthanol, le propanol ou l'isobutanol ou un mélange composé de ces alcools.

4. Procédé selon l'une quelconque des revendications précédentes, **caractérisé en ce que** les parties en volume de diesel et du mélange eau et alcool dans le carburant sont variables dans le temps et sont fonction des paramètres d'exploitation du moteur diesel et d'un système de traitement de gaz d'échappement du moteur diesel.

5. Procédé selon l'une quelconque des revendications précédentes, **caractérisé en ce qu'**une partie du carburant, qui contient de l'eau et de l'alcool en plus du diesel, est stockée dans un réservoir haute pression (9) du dispositif d'arrivée de carburant pour acheminement à la chambre de combustion (11.1, 11.2, 11.3) et un dispositif d'émulsification secondaire (15) est associé au réservoir haute pression (9) pour éviter toute séparation des composantes de carburant.

6. Dispositif permettant d'acheminer un carburant mixte à une chambre de combustion (11.1, 11.2, 11.3) d'un moteur diesel, comprenant
6.1 un premier réservoir d'approvisionnement (1) pour le stockage de diesel;
6.2 un second réservoir d'approvisionnement (2), pour le stockage d'un mélange eau et alcool, tandis que dans le deuxième réservoir d'approvisionnement (2) on a un rapport de mélange de 40:60 à 60:40 entre l'eau et l'alcool par rapport au volume;
**caractérisé en ce que**
6.3 le dispositif comprend de plus un dispositif d'arrivée de carburant pourvu d'un dispositif d'émulsifcation (6) pour obtenir une émulsion composée de diesel et du mélange eau et alcool avant de pénétrer dans la chambre de combustion (11.1, 11.2, 11.3).

7. Dispositif selon la revendication 6, **caractérisé en ce qu'**un dispositif d'émulsification secondaire (15) suit le dispositif d'émulsification (6), lequel dispositif stabilise un mélange de carburant composé de diesel, d'eau et d'alcool dans un réservoir haute pression (9) du dispositif d'arrivée de carburant.
